# EUROPEAN PATENT APPLICATION

(11) **EP 1 244 003 A2**
(43) Date of publication of application: **25.09.2002**
(21) Application number: 01307389.5
(22) Date of filing: 30.08.2001
(51) Int. Cl.: G06F 3/00

(54) **Information input system using bio feedback and method thereof**

(30) Priority: 09.03.2001 KR 2001012244
(71) Applicant: SAMSUNG ELECTRONICS CO., LTD., Suwon-City, Kyungki-do (KR)
(72) Inventor: Lee, Sang-goog, Incheon, Metropolitan-City (KR); Kang, Jung-ho, 1-408 Samsung 3-cha, Suwon-si, Gyeonggi-do (KR); Park, Tae-sik, 313-101 Hyundai, Suwon-si, Gyeonggi-do (KR)
(74) Representative: Chugg, David John

(57) **Abstract**

An information input system capable of improving a recognition rate and reliability by using force feedback and visual feedback and an information input method thereof are provided. The information input method of a computer system having a virtual keyboard (320) includes: (a) detecting motion information of a user's hands and fingers; (b) determining the locations of the user's hands and fingers by interpreting the motion information detected in step (a); (c) displaying an input apparatus (330) having a predetermined shape on the virtual keyboard (320) of a screen based on the locations of the user's hands and fingers determined in step (b); and (d) applying force to a finger corresponding to the location where information is input, if the input information is input by the input apparatus displayed in step (c).

## Description

The present invention relates to an information input system using bio feedback, and more particularly, to an information input system capable of obtaining a high recognition rate and high reliability, using bio feedback, and a method thereof.

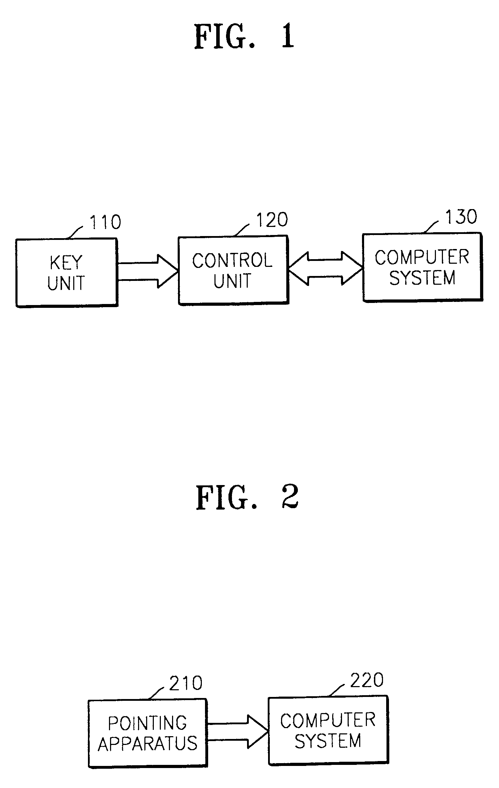

In the prior art, information processing apparatuses, such as computers, use a keyboard for inputting commands, characters, and numbers. That is, a conventional information input apparatus using a keyboard includes a key unit 110 having keys, a control unit 120 for detecting pushed keys and decoding signals corresponding to the pushed keys, and a computer system 130 for displaying a character corresponding to the decoded signal, as shown in Figure 1.

This conventional keyboard is generally connected to a desktop computer and not appropriate for a wearable or portable system. Therefore, to solve this problem, a virtual keyboard which is displayed on a screen is currently under development. The conventional virtual information input system includes a computer system 220 having a screen on which the virtual keyboard is displayed and a pointing apparatus 210 for selecting on the buttons of this virtual keyboard, as shown in Figure 2. However, in the conventional virtual information input system, a user has to watch the virtual keyboard on the screen and use a mouse or a pen-type pointing apparatus 210 in order to input a character. Therefore, the speed of inputting characters is very slow and, if the information input system is used for a long time, the user becomes very tired of inputting.

It is a first aim of embodiments of the present invention to provide an information input method capable of improving inputting speed and accuracy, in which what a user desires to input is input by detecting the motion of a finger in space or on a plane.

It is a second aim of embodiments of the present invention to provide an information input method capable of improving a recognition rate and reliability, by using force feedback and visual feedback.

It is a third aim of embodiments of the present invention to provide an information input system capable of improving an accuracy recognition and reliability, by applying the space-type information input method.

According to a first aspect of the present invention, there is provided an information input method comprising the steps of: (a) detecting motion information of a user's hands and fingers in space; (b) determining the locations of the user's hands and fingers by interpreting the motion information detected in step (a); and (c) inputting information corresponding to the locations of the user's hands and fingers determined in step (b).

According to a second aspect of the present invention, there is provided an information input method of a computer system having a virtual keyboard, the information input method comprising the steps of: (a) detecting motion information of human hands and fingers; (b) determining the locations of the user's hands and fingers by interpreting the motion information detected in step (a); (c) displaying an input apparatus having a predetermined shape on the virtual keyboard of a screen by referring to the locations of the user's hands and fingers, determined in step (b); and (d) applying force to a finger corresponding to the location where information is input, if the information is input by the input apparatus displayed in step (c).

Preferably, motion information is detected by a sensor attached to a predetermined part of a finger, which generates an acceleration signal in response to movement of the finger.

Information may be sent and received by wire or wirelessly.

In step (b), if a signal of a switch to which a predetermined function is defined is detected, a step for performing the predetermined function is preferably further included.

Preferably, in step (c) the input apparatus having a predetermined shape is displayed, overlaying the virtual keyboard of the computer.

Preferably, in step (c) the motion of the input apparatus having a predetermined shape is displayed on the screen in real time using the virtual keyboard and motion information.

Preferably, in step (d) the force is applied by a force generator attached to a predetermined part of the finger.

According to a third aspect, there is provided an information input system comprising: sensors which are attached to predetermined parts of a user's hands and fingers and sense motions of the user's hands and fingers; an information input processing unit for converting the motion information of the user's hands and fingers into location information of the user's hands and fingers, displaying an input apparatus having a predetermined shape on a virtual keyboard based on the converted location information of the user's hands and fingers, determining a finger which input information, and sending an information input completion signal to the finger; a processor for converting motion information detected by the sensors into data having a predetermined form, sending the converted data to the information input processing unit, and receiving an information input completion signal of a finger corresponding to the input information from the information input processing unit; and force generating units which are attached to predetermined parts of the user's fingers and apply force to a corresponding finger if an information input completion signal sent by the processor is received.

Preferably, the processor comprises: an analog-to-digital converting unit for converting the detected motion information into a digital signal; a central processing unit for converting motion information converted in the analog-to-digital converting unit into data having a predetermined form, and outputting a received information input completion signal to the force generating units; and a communications module for modulating the motion information converted in the central processing unit, sending the modulated motion information to the information input processing unit, and receiving an information input completion signal from the information input processing unit.

Preferably, information input processing unit comprises: an information interpreter for detecting location information of the user's hands and fingers by interpreting the motion information of the user's hands and fingers; an information generator for generating information and an input apparatus having a predetermined shape based on the location information of the user's hands and fingers interpreted by the information interpreter, and generating location information of a finger which moved; and an information input completion signal generator for outputting an information input completion signal to a corresponding finger based on the location information of the user's fingers generated by the information generator.

Also, in preferred embodiments the present invention provides an information input system for inputting information to a computer, the information input system comprising: sensors which are attached to predetermined parts of a user's hands and fingers and sense motions of the user's hands and fingers; a processor for interpreting the locations of the user's hands and fingers based on the motions of the user's hands and fingers detected by the sensors, sending the interpreted locations to the computer, and receiving an information input completion signal from the computer; and force generating units which are attached to predetermined parts of the user's fingers and, if an information input completion signal generated by the processor is received, applies force to the user's fingers which input information.

Preferably, the force generating units are devices for generating vibration.

The sensors may be *i*MENS (inertial Micro-Electro Mechanical System) sensors for sensing information on the acceleration and angular velocity of fingers.

Preferably, the processor is attached to the back of the user's hands or to the user's wrist.

The information input system may further comprise a predetermined number of function keys to be attached to a part of the user's hands for particular functions.

Preferably, the function keys are attached to a predetermined part between joints of an index finger.

The function keys may be defined arbitrarily by a user.

For a better understanding of the invention, and to show how embodiments of the same may be carried into effect, reference will now be made, by way of example, to the accompanying diagrammatic drawings in which:
Figure 1 is a block diagram of an information input system using a conventional keyboard;
Figure 2 is a block diagram of a conventional virtual information input system;
Figure 3 is a perspective view of an information input system according to an embodiment of the invention;
Figure 4 is a diagram showing a finger part to which a sensor and a force generator are attached;
Figure 5 is a block diagram of a first preferred embodiment of an information input system according to the present invention;
Figure 6 is a block diagram of a second preferred embodiment of an information input system according to the present invention;
Figure 7 is a detailed block diagram of an information input processing apparatus of the information input systems of Figures 5 and 6; and
Figure 8 is a flowchart of an information input method according to an embodiment of the present invention.

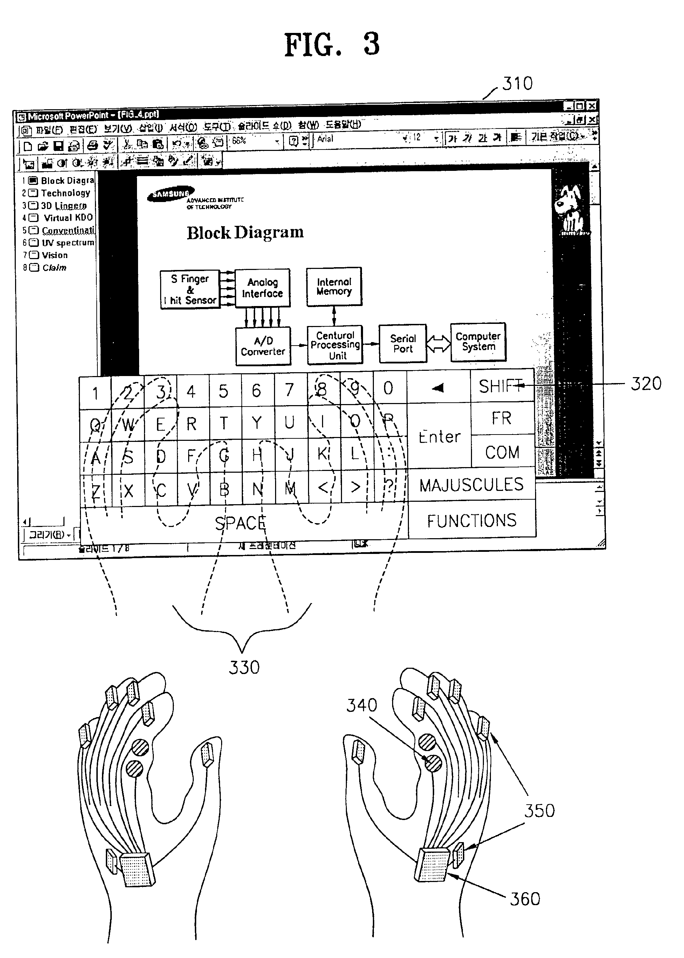

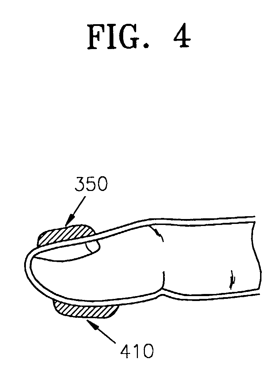

Figure 3 is a perspective view of a space-type information input system according to the present invention and Figure 4 is a diagram showing a finger part to which a sensor and a force generator are attached. Referring to Figures 3 and 4, the space-type information input system is divided into an information input apparatus and an information input processing apparatus. First, the information input processing apparatus displays a virtual keyboard 320 for visual feedback. The virtual keyboard 320 is implemented by software. The shape of an inputting apparatus is displayed on the keyboard 320. It is preferable that the shape of the inputting apparatus is a human hand 330. The information input apparatus, which has a glove shape, has sensors 350, attached to user's fingers or to the back of the user's hand and for sensing the motion of the user's fingers, force generators 410, each for applying force to a predetermined part of a finger, and a processor 360, which is attached to the back of the user's hand or to the user's wrist and communicates information with the sensors 350 and force generators 410. It is preferable that the sensors 350 are gyro sensors or *i*MEMS (inertial Micro-Electro Mechanical System) sensors. Preferably, a device for generating force or vibration is used as the force generator 410. Also, it is preferable that the sensors 350 and the force generators 410 are attached to the user's finger nails and the bottom of the user's fingers, respectively. However, the sensors 350 and the force generators 410 may be attached to any parts of the user's fingers. Switches 340 are set to operate as function keys, such as SHIFT, Ctrl, and Caps Lock, and the user may set the switches 340 as arbitrary function keys. Preferably, the switches are attached to a part between the first joint and the second joint of an index finger.

The information input processing apparatus detects motions of the user's hands and fingers, interprets detected motions, and displays the motions of the user's hands on the virtual keyboard so as to provide visual feedback of motions to the user. Also, the information input processing apparatus detects a motion of fingers, inputs information on the corresponding location, and provides force feedback to the user so that the user can confirm the input. The hand shapes 330 displayed on the screen are overlaid on virtual keyboard based on the location information of the user' hands and fingers.

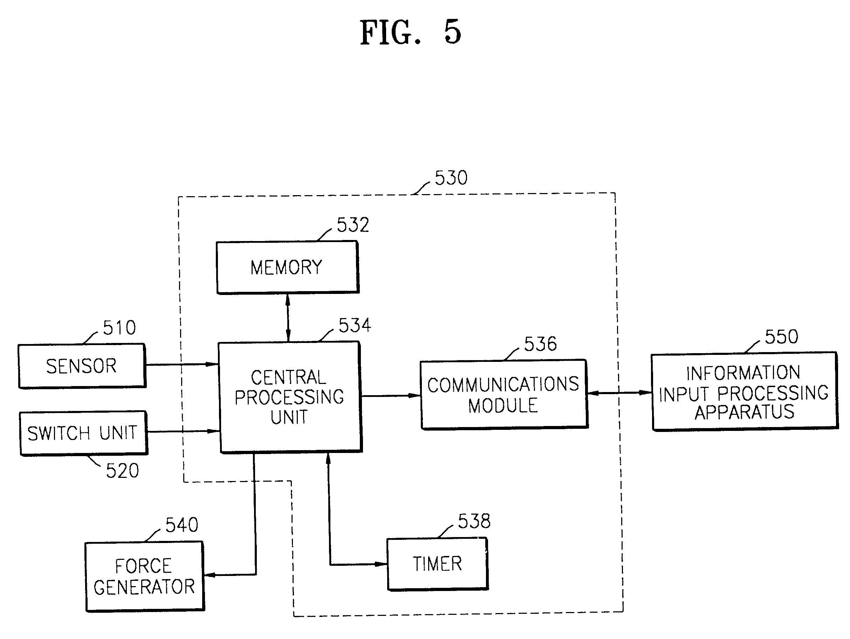

Figure 5 is a block diagram of a first preferred embodiment of an information input system according to the present invention. Sensors 510 detect the motions of the user's hands and fingers and output acceleration information or angular velocity information in the form of a digital signal. A switch unit 520 generates function key signals that can be defined by a user, such as Shift, Ctrl, and Caps Lock. A processor 530 interprets motion information of the user's hands and fingers, which are generated in the sensors 510 and the switching unit 520, or a signal of a selected key, determines the locations of the user's fingers and hands and then sends the determined location information to an information input processing apparatus 550 having a virtual keyboard. The processor 530 receives an information input completion signal from the information input processing apparatus 550 and applies force to corresponding user's hands and fingers.

More specifically, the processor 530 has a central processing unit 534, a communications module 536, a memory 532, and a timer 538. The central processing unit 534 interprets motion information of the user's hands and fingers, which is generated in the sensors 510 and the switching unit 520, or a signal of a selected key, and determines the locations of the user's fingers and hands. The central processing unit 534 receives an information input completion signal from the information input processing apparatus 550 and sends the received signal to force generators 540. The communications module 536 modulates location information of the user's hands and fingers and key information, which are processed in the central processing unit 534, sends the modulated information to the information input processing apparatus 550 by wire or wirelessly, receives an information input completion signal from the information input processing apparatus 550, and demodulates the received signal. The memory 532 stores a program for driving the central processing unit 534. The timer 538 periodically informs the central processing unit 534 of time so that the central processing unit 534 can process data in each predetermined cycle.

Based on the location information of the user's hands and fingers output from the processor 530, the information input processing apparatus 550 displays the shape of an inputting apparatus on the virtual keyboard. It is preferable that the shape of the inputting apparatus is a human hand. If a motion of a user's finger to select a character is detected, information corresponding to the location of the finger is input and, at the same time, an information input completion signal, containing the identifier (ID) of the finger which inputs the information, is generated.

The force generators 540 receives the information input completion signal generated in the central processing unit 534 and applies force to the part of the corresponding finger.

As another embodiment of the present invention, functions of the processor 530 and the information input processing apparatus 550 can be set differently.

That is, the processor 530 converts detected motion information of the user's hands and fingers or key information into data, sends the converted data to the information input processing apparatus 550, and receives an information completion signal for a finger which inputs the information from the information input processing apparatus 550. The information input processing apparatus 550 interprets motion information of the user's hands and fingers generated in the processor 530, determines the locations of the user's hands and fingers, and then performs visual and force feedback functions.

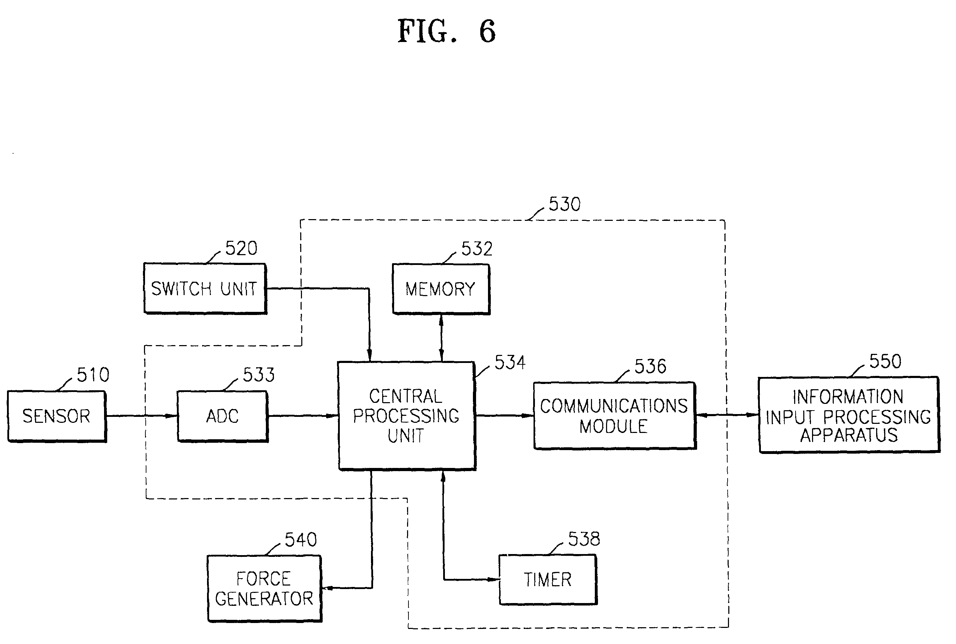

Figure 6 is a block diagram of a second preferred embodiment of an information input system according to the present invention. Referring to Figure 6, sensors 510 detect motions of the user's hands and fingers, output the detected motions as acceleration information or angular velocity information in the form of an analog signal. An analog-to-digital converter (ADC) converts the analog signal of motion information generated in the sensors 510 into a digital signal. The other blocks in Figure 6 have the same functions as explained in Figure 5.

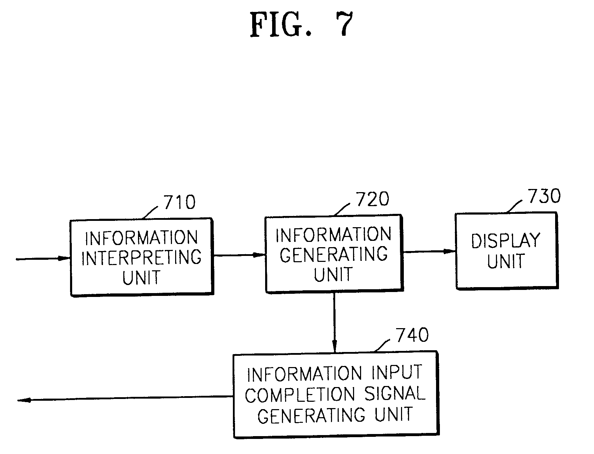

Figure 7 is a detailed block diagram of an information input processing apparatus of the information input systems of Figures 5 and 6. Referring to Figure 7, an information interpreting unit 710 interprets motion information input by the information input apparatus and detects location information of the user's hands and fingers. Referring to the location information of the user's hands and fingers interpreted by the information interpreting unit 710, an information generating unit 720 generates information and a hand shape, which correspond to the location information, and at the same time, generates the location information of the finger which moved. An information input completion signal generating unit 740 receives the location information of the finger which moved, that is, the location information generated by the information generating unit 720, and outputs an information input completion signal to the corresponding finger of the information input apparatus. A display unit 730 displays the information and hand shape, which are generated in the information generating unit 720.

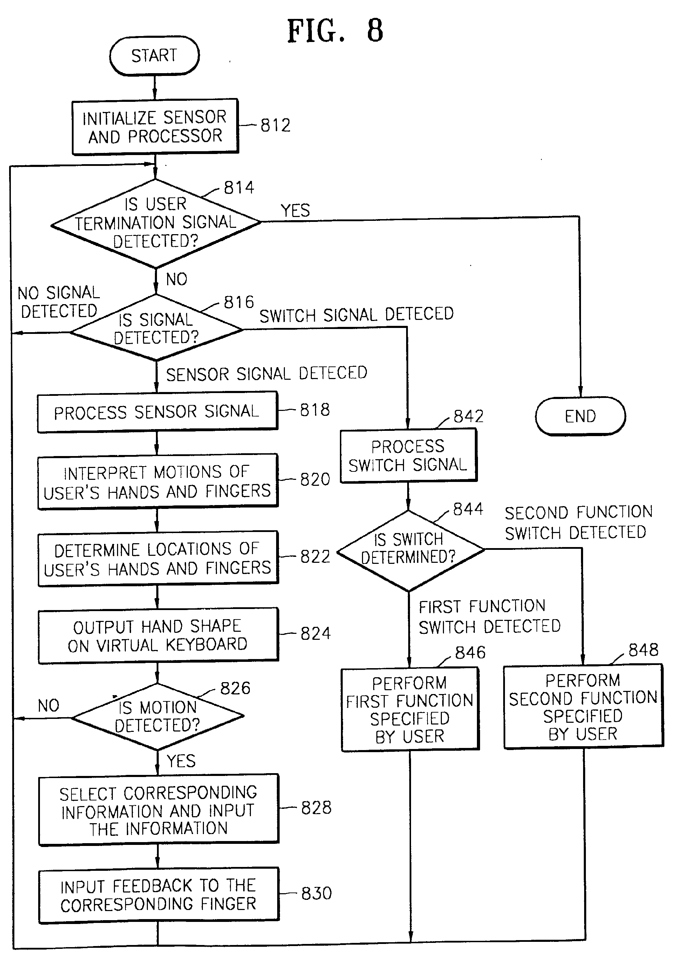

Figure 8 is a flowchart of an information input method according to the present invention. First, the sensors 510 and the processor 530 are initialized in step 812. Then, it is determined whether or not a user termination signal is detected in step 814. If the user termination signal is detected, the information processing is finished, and if the user termination signal is not detected, it is determined whether or not an input signal is detected in step 816.

Therefore, after determining whether or not an input signal is detected, one of the following operations 1) and 2) is performed depending on the type of the detected signal.

1) If a sensor signal is detected, the motion information of the user's hands and fingers generated by the sensors 510 is converted into data having a predetermined form which can be used by a computer in step 818. Then, the motion information of the user's hands and fingers in the converted data form is interpreted in step 820. The locations of the user's hands and fingers are determined by the interpreted motion information in step 822. Then, based on the location information of the user's hands and fingers, a human hand shape is output on the virtual keyboard in step 824.

Then, it is determined in step 826 whether or not a motion corresponding to information selection on the virtual keyboard by a predetermined finger is detected. If the click motion is detected, information corresponding to the location of the finger is input in step 828.

If the information is input, the information is displayed on the screen and, at the same time, using the finger ID information, an information input completion signal is fed back to a force generator 540 attached to the user's finger which input the information.

2) If a switch signal is detected, the function switch signal generated by the switching unit 520 is converted into data having a predetermined form which can be used by a computer in step 842.

At this time, it is determined by the function switch signal converted into data whether the signal is a first function switch signal or a second function switch signal in step 844. If the signal is the first function switch signal, the first function, which is defined by the user, for example, a control function (Ctrl), is performed in step 846. If the signal is the second function switch signal, the second function, which is defined by the user, for example, a shift function (Shift), is performed in step 848.

The steps 1) and 2) are repeated until a user termination signal is detected in step 814.

So far, optimum embodiments have been explained in the drawings and specification, and though specific terminologies are used here, they are only for explaining the present invention. Therefore, the present invention is not restricted to the above-described embodiments and many variations are possible within the spirit and scope of the present invention. That is, the information input system according to the present invention is not only applied to a personal computer (PC), and electronic handheld devices, such as a personal digital assistant (PDA) and a mobile phone, but also applied to a wireless portable pointing apparatus, a wireless portable keyboard, an apparatus for recognizing hand motions and gestures, a virtual music playing apparatus, computer game systems, virtual environment exercise and training apparatuses, virtual reality data gloves, an apparatus for tracing mechanical shock and vibration, a monitoring apparatus, a suspension apparatus, and a robot motion information obtaining apparatus.

According to the embodiments of the present invention as described above, a space-type information input using bio feedback enables high recognition rate and high reliability without a training process. Particularly, information is input quickly and accurately through bio feedback and information is input with high reliability by giving an input confirmation signal to a user through force feedback.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings) , or to any novel one, or any novel combination, of the steps of any method or process so disclosed.

## Claims

1. An information input method comprising the steps of:
(a) detecting motion information of a user's hands and fingers in space;
(b) determining the locations of the user's hands and fingers by interpreting the motion information detected in step (a); and
(c) inputting information corresponding to the locations of the user's hands and fingers determined in step (b) .

2. An information input method of a computer system having a virtual keyboard, the information input method comprising the steps of:
(a) detecting motion information of human hands and fingers;
(b) determining the locations of the user's hands and fingers by interpreting the motion information detected in step (a) ;
(c) displaying an input apparatus having a predetermined shape on the virtual keyboard of a screen by referring to the locations of the user's hands and fingers, determined in step (b); and
(d) applying force to a finger corresponding to the location where information is input, if the information is input by the input apparatus displayed in step (c).

3. The information input method of claim 1 or 2, wherein motion information is detected by a sensor (350) attached to a predetermined part of a finger, which generates an acceleration signal in response to movement of the finger.

4. The information input method of claim 1 or 2, wherein information is sent and received by wire or wirelessly.

5. The information input method of claim 2, wherein in step (b), if a signal of a switch to which a predetermined function is defined is detected, a step for performing the predetermined function is further included.

6. The information input method of claim 2, wherein in step (c) the input apparatus having a predetermined shape is displayed, overlaying the virtual keyboard of the computer.

7. The information input method of claim 2, wherein in step (c) the motion of the input apparatus having a predetermined shape is displayed on the screen in real time using the virtual keyboard and motion information.

8. The information input method of claim 2, wherein in step (d) the force is applied by a force generator (410) attached to a predetermined part of the finger.

9. An information input system comprising:
sensors (350) which are attached to predetermined parts of a user's hands and fingers and sense motions of the user's hands and fingers;
an information input processing unit (550) for converting the motion information of the user's hands and fingers into location information of the user's hands and fingers, displaying an input apparatus having a predetermined shape on a virtual keyboard based on the converted location information of the user's hands and fingers, determining a finger which input information, and sending an information input completion signal to the finger;
a processor (530) for converting motion information detected by the sensors (350) into data having a predetermined form, sending the converted data to the information input processing unit (550), and receiving an information input completion signal of a finger corresponding to the input information from the information input processing unit (550); and
force generating units (410) which are attached to predetermined parts of the user's fingers and apply force to a corresponding finger if an information input completion signal sent by the processor is received.

10. The information input system of claim 9, wherein the processor (530) comprises:
an analog-to-digital converting unit (533) for converting the detected motion information into a digital signal;
a central processing unit (534) for converting motion information converted in the analog-to-digital converting unit (533) into data having a predetermined form, and outputting a received information input completion signal to the force generating units (540); and
a communications module (536) for modulating the motion information converted in the central processing unit (534), sending the modulated motion information to the information input processing unit (550), and receiving an information input completion signal from the information input processing unit (550).

11. The information input system of claim 9, wherein the information input processing unit (550) comprises:
an information interpreter (710) for detecting location information of the user's hands and fingers by interpreting the motion information of the user's hands and fingers;
an information generator (720) for generating information and an input apparatus having a predetermined shape based on the location information of the user's hands and fingers interpreted by the information interpreter, and generating location information of a finger which moved; and
an information input completion signal generator (740) for outputting an information input completion signal to a corresponding finger based on the location information of the user's fingers generated by the information generator (720).

12. An information input system for inputting information to a computer, the information input system comprising:
sensors (510) which are attached to predetermined parts of a user's hands and fingers and sense motions of the user's hands and fingers;
a processor (530) for interpreting the locations of the user's hands and fingers based on the motions of the user's hands and fingers detected by the sensors, sending the interpreted locations to the computer, and receiving an information input completion signal from the computer; and
force generating units (540) which are attached to predetermined parts of the user's fingers and, if an information input completion signal generated by the processor is received, applies force to the user's fingers which input information.

13. The information input system of claim 9 or 12, wherein the force generating units (540) are devices for generating vibration.

14. The information input system of claim 9, 12 or 13, wherein the sensors (510) are *i*MENS (inertial Micro-Electro Mechanical System) sensors for sensing information on the acceleration and angular velocity of fingers.

15. The information input system of claim 9, 12, 13 or 14, wherein the processor (530) is attached to the back of the user's hands or to the user's wrist.

16. The information input system of claim 9, 12, 13, 14 or 15, further comprising a predetermined number of function keys to be attached a part of the user's hands for particular functions.

17. The information input system of claim 16, wherein the function keys are attached to a predetermined part between joints of an index finger.

18. The information input system of claim 16, wherein the function keys are defined arbitrarily by a user.
